(19) Europäisches Patentamt
European Patent Office
Office européen des brevets

(11) **EP 2 367 040 A1**

(12) **EUROPÄISCHE PATENTANMELDUNG**

(43) Veröffentlichungstag:
21.09.2011 Patentblatt 2011/38

(51) Int Cl.:
*G02B 17/06* (2006.01)    *F41G 1/00* (2006.01)

(21) Anmeldenummer: 11001923.9

(22) Anmeldetag: 08.03.2011

(84) Benannte Vertragsstaaten:
AL AT BE BG CH CY CZ DE DK EE ES FI FR GB
GR HR HU IE IS IT LI LT LU LV MC MK MT NL NO
PL PT RO RS SE SI SK SM TR
Benannte Erstreckungsstaaten:
BA ME

(30) Priorität: 19.03.2010 DE 202010003869 U

(71) Anmelder: Leica Camera AG
35606 Solms (DE)

(72) Erfinder: Kammans, Sigrun
35745 Herborn (DE)

(74) Vertreter: Stamer, Harald
Jahnstrasse 7
35579 Wetzlar (DE)

(54) **Vorrichtung zur Beleuchtung einer Strichplatte**

(57) Eine Vorrichtung zur Beleuchtung einer auf einer ebenen transparenten Strichplatte als Beugungsstruktur aufgebrachten Markierung, wobei die Beleuchtungsstrahlen über eine Seitenrandfläche der Strichplatte so in die Strichplatte eingeleitet werden, dass sie nach Beugung an der Markierung senkrecht zur Ebene der Strichplatte abgestrahlt werden, wobei an der Seitenrandfläche ein konkav gekrümmter Spiegel mit zwei Brennpunkten derart befestigt ist, dass eine Lichtquelle im Bereich des ersten Brennpunktes und die Markierung im Bereich des zweiten Brennpunktes angeordnet sind, zeichnet sich dadurch aus, dass diametral zu dem ersten Spiegel ein zweiter Spiegel mit zwei Brennpunkten an der Seitenrandfläche derart befestigt ist, dass eine zweite Lichtquelle mit einer zweiten Emissionswellenlänge in dessen erstem Brennpunkt und die Markierung im Bereich des zweiten Brennpunktes des zweiten Spiegels angeordnet sind.

Fig. 1

EP 2 367 040 A1

**Beschreibung**

Die Erfindung betrifft eine Vorrichtung zur Beleuchtung einer auf einer ebenen transparenten Strichplatte als Beugungsstruktur aufgebrachten Markierung mit den Merkmalen des Oberbegriffs des Anspruchs.

Aus EP 0 886 163 B1 ist eine optische Einrichtung mit einer beleuchteten Strichplatte bekannt. Die Strichplatte besteht aus einer ebenen transparenten Trägerscheibe, auf die eine als Beugungsstruktur ausgebildete Markierung aufgebracht ist. Strichplatten werden insbesondere in Zielfernrohre zur Zielmarkierung eingesetzt. Die Markierung liegt in einer Zwischenbildebene des Zielfernrohres. Die Markierung kann in Lichtrichtung des Zielfernrohres auf der Vorder- oder Rückseite der Trägerscheibe aufgebracht sein.

Die Beleuchtung der Markierung erfolgt durch eine seitlich zur Trägerscheibe angeordnete Lichtquelle durch die Randfläche der Trägerscheibe hindurch. Durch die Wirkung der Beugungsstruktur werden die Beleuchtungsstrahlen in der ersten Beugungsordnung in die Richtung der optischen Achse des Zielfernrohres zum Beobachter gelenkt, so dass die Markierung für den Beobachter im Zwischenbild sichtbar wird.

Aus EP 1 653 271 B1 ist eine Beleuchtungsvorrichtung bekannt, mit der die Beleuchtung der Beugungsstruktur der bekannten Strichplatte verbessert wird, so dass eine größere Helligkeit und ein höherer Kontrast der Markierung im Zwischenbild erreicht werden. Die Beleuchtungsvorrichtung besteht aus einem seitlich neben der Trägerscheibe der Markierung angeordneten Spiegel mit einer Spiegelfläche, die derart gekrümmt ist, dass der Spiegel zwei Brennpunkte aufweist. Im Bereich des einen Brennpunktes befindet sich die Lichtquelle. Die vom Spiegel reflektierten Lichtstrahlen laufen zu der Markierung hin zusammen, die im zweiten Brennpunkt des Spiegels liegt. Je nach Lage der Markierung auf der in Lichtrichtung vorderen oder hinteren Fläche der Trägerscheibe werden die Lichtstrahlen direkt oder nach einer oder mehreren Totalreflektionen an einer inneren Fläche der Trägerscheibe auf die Markierung gelenkt.

Die Spiegelfläche soll vorzugsweise an der Rückseite eines von der Lichtquelle von vorne angestrahlten Spiegelelementes angeordnet sein. Als Lichtquelle wird vorzugsweise eine Leuchtdiode mit vorgegebener Emissionswellenlänge vorgesehen. Das Spiegelelement kann insbesondere durch Kleben am Rand der Trägerscheibe befestigt sein. Die Leuchtdiode kann mit der Vorderseite des Spiegelelementes verbunden sein.

Der Erfindung lag die Aufgabe zugrunde, die Vorrichtung in der Weise zu erweitern, dass eine Darstellung derselben Markierung in unterschiedlichen Farben möglich ist.

Diese Aufgabe wird bei einer Vorrichtung der eingangs genannten Art erfindungsgemäß durch die kennzeichnenden Merkmale des Anspruchs gelöst.

In der Zeichnung ist ein Ausführungsbeispiel der erfindungsgemäßen Beleuchtungsvorrichtung schematisch dargestellt. Dabei zeigen

Fig.1 eine Aufsicht auf eine Strichplatte mit zwei Einkoppelbereichen,

Fig.2 ein über einen ersten Einkoppelbereich eingestrahltes Strahlenbündel und

Fig.3 ein über einen zweiten Einkoppelbereich eingestrahltes Strahlenbündel.

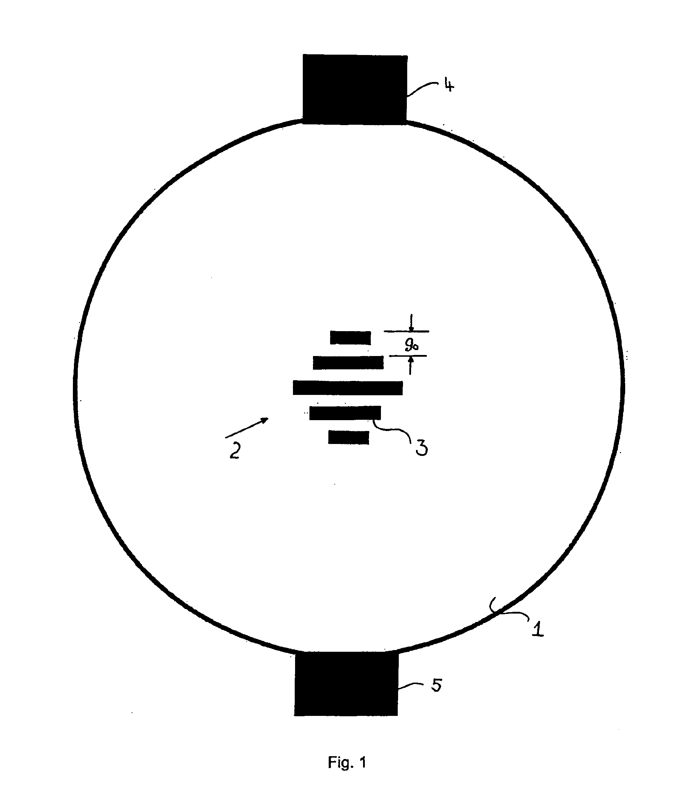

Fig. 1 zeigt in der Aufsicht eine Strichplatte 1 mit einer im Flächenbereich 2 liegenden Gitterstruktur 3. Der Flächenbereich 2 hat z.B. einen Durchmesser von etwa 1,6 mm und erscheint im Beugungsbild als leuchtender Punkt. An die Strichplatte 1 angeformt sind zwei einander diametral gegenüber liegende Einkoppelelemente 4, 5, die jeweils ein aus einem Spiegelelement und einer LED bestehendes Beleuchtungssystem repräsentieren. Bei gleicher Gitterstruktur 3 können die Einkoppelelemente 4, 5 für unterschiedliche Wellenlänger der LED und damit für unterschiedliche Farbdarstellungen der Markierung ausgelegt sein.

Dieser Anordnung liegen die nachstehenden Gesetzmäßigkeiten für die Beugung eines Lichtstrahls an einem Gitter zugrunde, die durch die Gittergleichung beschrieben werden:

$$m \cdot \lambda = n \cdot g \cdot \sin \alpha + n' \cdot g \cdot \sin \alpha'$$

Dabei bedeuten $\alpha$ den Anstrahlwinkel, unter dem der Beleuchtungsstrahl auf die Ebene der Gitterstruktur auftrifft, $\alpha'$ den Abstrahlwinkel des gebeugten Strahls gegenüber der Senkrechten zur Gitterstruktur, g die Gitterkonstante, $\lambda$ die Wellenlänge des Beleuchtungsstrahls, n die Brechzahl des Mediums vor dem Gitter, n' die Brechzahl des Mediums in Lichtrichtung hinter dem Gitter und m die Beugungsordnung. Wenn die Gitterstruktur reflektiv ist und innerhalb der Trägerscheibe angestrahlt wird, dann ist n' = n. Wenn das Gitter transmittiv ist und innerhalb der Trägerscheibe angestrahlt wird, dann ist n' = 1.

Wenn, wie in dem vorstehenden Anwendungsbeispiel beschrieben, der Abstrahlwinkel $\alpha'$ längs der optischen Beobachtungsachse erfolgen soll, dann ist $\alpha' = 0$ und die Gittergleichung reduziert sich zu

$$m \cdot \lambda = n \cdot g \cdot \sin \alpha$$

Für die Beleuchtung einer Gitterstruktur müssen eine bestimmte Wellenlänge $\lambda_0$, eine Brechzahl n der Trägerscheibe, eine geeignete Gitterkonstante $g_0$ und ein zugehöriger Anstrahlwinkel $\alpha_0$ festgelegt werden.

Damit ist der Abstrahlwinkel $\alpha'$ eine Funktion der Wellenlänge $\lambda$, sowie der festgelegten konstanten Parameter, nämlich der Gitterkonstanten $g_0$, des Anstrahlwinkels $\alpha_0$ und der Brechzahl n der Trägerscheibe.

$$\alpha'(\lambda) = \arcsin\left(\frac{m \cdot \lambda - n \cdot g_0 \cdot \sin \alpha_0}{n \cdot g_0}\right) \text{ (reflektives Gitter)}$$

$$\alpha'(\lambda) = \arcsin\left(\frac{m \cdot \lambda - n \cdot g_0 \cdot \sin \alpha_0}{g_0}\right) \text{ (transmittives Gitter)}$$

Diese Wellenlängen-Abhängigkeit des Abstrahlwinkels $\alpha'$ ist der Grund dafür, dass eine mehrfarbige LED-Beleuchtung ausgehend von einer festen Postition der LED unterschiedliche Abstrahlwinkel $\alpha'$ erzeugt. Für den Betrachter des durch die Gitterstruktur dargestellten Zielpunktes ergeben sich damit zum Teil erhebliche Abweichungen in der Parallaxe. Bei der Auswahl der LED muß daher auf eine schmalbandige Emissionscharakteristik großer Wert gelegt werden.

Soll der Abstrahlwinkel $\alpha'$ für alle Farben längs der optischen Achse OA erfolgen, d.h. $\alpha'(\lambda) = const = 0$, dann ergibt sich, dass der Anstrahlwinkel $\alpha$ eine Funktion der Wellenlänge $\lambda$, der Gitterkonstanten $g_0$, der benutzten Beugungsordnung $m_0$ und der Brechzahl n der Trägerscheibe ist:

$$\alpha(\lambda) = \arcsin\left(\frac{m_0 \cdot \lambda}{n \cdot g_0}\right)$$

Die Gitterkonstante $g_0$ und die Brechzahl n sind dabei als konstant vorgegeben. Damit ergibt sich für die Differenz der notwendigen Anstrahlwinkel $\Delta\alpha$ für die Beleuchtung mit zwei unterschiedlichen Farben die Winkeldifferenz

$$\Delta\alpha(\lambda_1, \lambda_2) = \alpha(\lambda_1) - \alpha(\lambda_2) = \arcsin\left(\frac{m_0 \cdot \lambda_1}{n \cdot g_0}\right) - \arcsin\left(\frac{m_0 \cdot \lambda_2}{n \cdot g_0}\right)$$

Erfindungsgemäß wird zusätzlich zu einer ersten Beleuchtung mit der Wellenlänge $\lambda_0$ eine zweite Beleuchtung mit der Wellenlänge $\lambda_1$ vorgesehen, indem eine LED mit der Wellenlänge $\lambda_1$ auf der Seite der Trägerscheibe 1 senkrecht zur Gitterstruktur 14 angeordnet wird, die der LED mit der Wellenlänge $\lambda_0$ gegenüber liegt. Über eine entsprechend angepasste Einkoppel- und Abbildungsvorrichtung unter Nutzung der - $m_0$-ten Beugungsordnung wird die Beugungsstruktur unter dem Winkel

$$\alpha(\lambda_1) = \arcsin\left(\frac{-m_0 \cdot \lambda_1}{n \cdot g_0}\right)$$

angestrahlt. Dadurch ist gewährleistet, dass für beide Abstrahlwinkel gilt:

$$\alpha'(\lambda_0) = \alpha'(\lambda_1) = 0$$

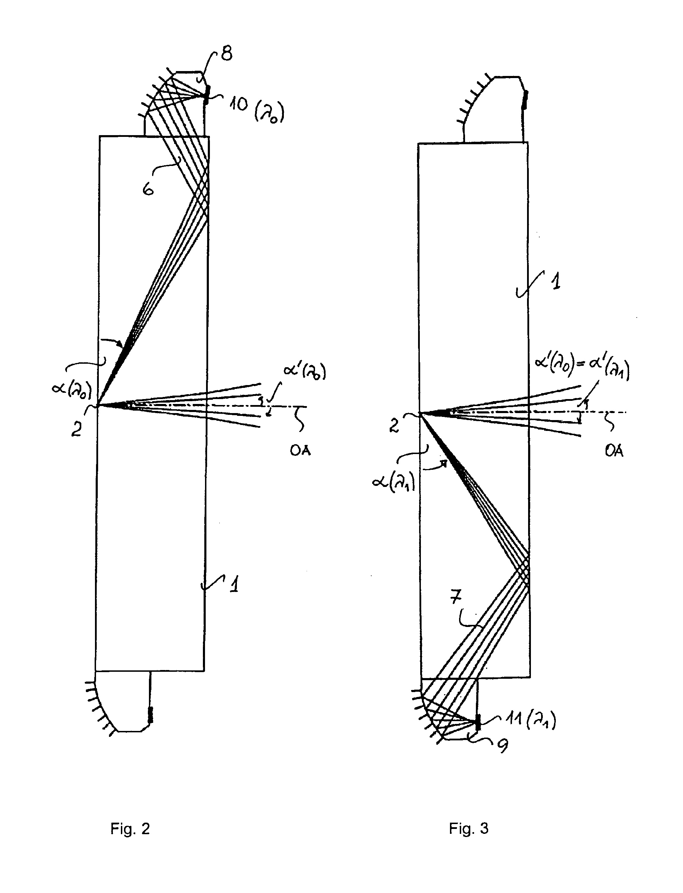

In Fig. 2 und Fig. 3 sind die unterschiedlichen Werte der Anstrahlwinkel $\alpha(\lambda_0)$ und $\alpha(\lambda_1)$ an den unterschiedlichen Abständen der Auftreffstellen der Beleuchtungsstrahlenbündel 6, 7 vom Randbereich der Strichplatte 1 zu erkennen.

An die Randbereiche der Strichplatte 1 sind an sich bekannte erste und zweite Spiegelelemente 8, 9 angesetzt. Mit dem ersten Spiegelelement 8 ist eine LED 10 mit der Wellenlänge $\lambda_0$ und mit dem zweiten Spiegelelement 9 ist eine LED 11 mit der Wellenlänge $\lambda_1$ verbunden. Der Flächenbereich 2 mit der Gitterstruktur liegt jeweils im zweiten Brennpunkt der Spiegelelemente 8, 9.

Wenn die Differenz der Wellenlängen und damit die Differenz der notwendigen Einstrahlwinkel groß genug ist, dann können auf einer Randseite der Strichplatte auch zwei Einkoppelelemente hintereinander angebracht werden. Zusammen mit der auf der gegenüber liegenden Seite eingekoppelten Beleuchtung kann die Gitterstruktur dann auch mit mehr als zwei Farben beleuchtet werden.

Bei der Anordnung der Beleuchtungsvorrichtungen für unterschiedliche Wellenlängen können zur Erzeugung der benötigten unterschiedlichen Anstrahlwinkel auch verschiedene Anzahlen von Totalreflektionen in der Strichplatte genutzt werden.

Für eine kontinuierliche Änderung der Farben und damit der Wellenlängen, die eine LED ausstrahlt, kann eine Vorrichtung vorgesehen sein, bei der die LED und die zugehörigen Spiegelelemente so gedreht werden, dass der Anstrahlwinkel $\alpha$ der vorbeschriebenen funktionalen Abhängigkeit genügt, wobei die Abbildung der LED auf die Gitterstruktur erhalten bleibt. Die LED kann dabei mit dem Spiegelelement über eine mechanische Kurve bewegt werden.

**Patentansprüche**

1. Vorrichtung zur Beleuchtung einer auf einer ebenen transparenten Strichplatte als Beugungsstruktur aufgebrachten Markierung, wobei die Beleuchtungsstrahlen über eine Seitenrandfläche der Strichplatte so in die Strichplatte eingeleitet werden, dass sie nach Beugung an der Markierung senkrecht zur Ebene der Strichplatte abgestrahlt werden, wobei an der Seitenrandfläche ein konkav gekrümmter Spiegel mit zwei Brennpunkten derart befestigt ist, dass eine Lichtquelle im Bereich des ersten Brennpunktes und die Markierung im Bereich des zweiten Brennpunktes angeordnet sind, **dadurch gekennzeichnet, dass** diametral zu dem ersten Spiegel ein zweiter Spiegel mit zwei Brennpunkten an der Seitenrandfläche derart befestigt ist, dass eine zweite Lichtquelle mit einer zweiten Emissionswellenlänge in dessen erstem Brennpunkt und die Markierung im Bereich des zweiten Brennpunktes des zweiten Spiegels angeordnet sind.

Fig. 1

Fig. 2

Fig. 3

**EP 2 367 040 A1**

Europäisches Patentamt
European Patent Office
Office européen des brevets

## EUROPÄISCHER RECHERCHENBERICHT

Nummer der Anmeldung

EP 11 00 1923

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,P | WO 2011/004709 A1 (NIKON VISION CO LTD [JP]; ARAI SATOSHI [JP]) 13. Januar 2011 (2011-01-13) * Zusammenfassung; Abbildungen 2-7 * ----- | 1 | INV. G02B17/06 F41G1/00 |
| Y,D | EP 1 653 271 A1 (SWAROVSKI OPTIK KG [AT]) 3. Mai 2006 (2006-05-03) * Zusammenfassung * * Absatz [0006] - Absatz [0014] * * Abbildungen * ----- | 1 | |
| Y | DE 25 29 418 A1 (FRANCE ETAT) 29. Januar 1976 (1976-01-29) * Seite 1 * * Seite 4, Zeile 1 - Zeile 7 * * Seite 5, Zeile 4 - Seite 6, Zeile 17 * * Abbildungen 1,2 * ----- | 1 | |
| A,D | EP 0 886 163 A2 (HEIDENHAIN GMBH DR JOHANNES [DE]) 23. Dezember 1998 (1998-12-23) * Zusammenfassung; Abbildungen * ----- | 1 | |
| A | US 2002/163791 A1 (HOELEN CHRISTOPH GERARD AUGUST [NL] ET AL) 7. November 2002 (2002-11-07) * Zusammenfassung; Abbildungen 2A,2B * ----- | 1 | RECHERCHIERTE SACHGEBIETE (IPC) G02B F41G |
| A | GB 402 825 A (ODHAMS PRESS LTD; CHARLES WILLIAM GALTON) 11. Dezember 1933 (1933-12-11) * Abbildungen * ----- | 1 | |

Der vorliegende Recherchenbericht wurde für alle Patentansprüche erstellt

| Recherchenort | Abschlußdatum der Recherche | Prüfer |
|---|---|---|
| Den Haag | 1. Juli 2011 | Seibert, Joachim |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

\.......................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**                    EP 11 00 1923

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

01-07-2011

| Im Recherchenbericht angeführtes Patentdokument | Datum der Veröffentlichung | Mitglied(er) der Patentfamilie | | Datum der Veröffentlichung |
|---|---|---|---|---|
| WO 2011004709 A1 | 13-01-2011 | JP | 2011017884 A | 27-01-2011 |
| EP 1653271 A1 | 03-05-2006 | AT | 404901 T | 15-08-2008 |
|  |  | US | 2006092507 A1 | 04-05-2006 |
| DE 2529418 A1 | 29-01-1976 | CH | 591093 A5 | 15-09-1977 |
|  |  | FR | 2278090 A1 | 06-02-1976 |
|  |  | GB | 1515553 A | 28-06-1978 |
|  |  | IT | 1038774 B | 30-11-1979 |
| EP 0886163 A2 | 23-12-1998 | AT | 264515 T | 15-04-2004 |
|  |  | DE | 19726397 A1 | 24-12-1998 |
| US 2002163791 A1 | 07-11-2002 | CN | 1463344 A | 24-12-2003 |
|  |  | EP | 1379808 A1 | 14-01-2004 |
|  |  | WO | 02084173 A1 | 24-10-2002 |
|  |  | JP | 2004526290 A | 26-08-2004 |
|  |  | TW | I223046 B | 01-11-2004 |
| GB 402825 A | 11-12-1933 | KEINE | | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0886163 B1
- EP 1653271 B1